# FASCICULE DE BREVET EUROPEEN

(11) **EP 1 727 657 B1**
(45) Date de publication et mention de la délivrance du brevet: **08.06.2022**
(21) Numéro de dépôt: 05708856.9
(22) Date de dépôt: 26.02.2005
(51) Int. Cl.: B29B 11/10, B29B 11/12, B29B 11/14, B29C 43/20, B29C 43/34, B29C 48/21, B29C 48/08, B32B 1/08, B29K 105/00, B29K 23/00, B29K 25/00, B29K 27/00, B29K 67/00, B29K 77/00, B29L 31/56, B29L 9/00

(54) **méthode de fabrication de doses de résine synthétique multicouche**
Verfahren zur Herstellung mehrschichtiger Kunstharzdosen
method of manufacturing multilayered synthetic resin doses

(30) Priorité: 01.03.2004 CH 336042004; 04.10.2004 CH 161904; 08.12.2004 CH 203404; 08.12.2004 CH 203304
(43) Date de publication de la demande: 06.12.2006
(73) Titulaire: Aisapack Holding SA, 1896 Vouvry (CH)
(72) Inventeur: THOMASSET, Jacques, 1896 Vouvry (CH)
(74) Mandataire: Grosfillier, Philippe
(86) Numéro de dépôt international: PCT/IB2005/050708
(87) Numéro de publication internationale: WO 2005/084904

(56) Documents cités:
- US-A- 4 154 893
- US-A- 4 876 052
- US-A1- 2002 182 351
- US-A1- 2003 080 461
- PATENT ABSTRACTS OF JAPAN vol. 014, no. 305 (M-0992), 29 juin 1990 (1990-06-29) & JP 02 098415 A (HIROSHI UENO), 10 avril 1990 (1990-04-10) cité dans la demande
- None

## Description

### Domaine de l'invention

La présente invention concerne une méthode de fabrication de doses de résine synthétique multicouche pour la réalisation d'objets multicouches par compression moulage selon la revendication

### Etat de la technique

Le brevet US 4 876 052 décrit une dose multicouche cylindrique (figure 1) caractérisée par le fait qu'une résine fonctionnelle 3 est complètement emprisonnée à l'intérieur d'une résine synthétique 2. La résine fonctionnelle et la résine extérieure sont de nature différente. Par exemple, la résine fonctionnelle présente des propriétés barrières aux gaz élevées, tandis que la résine formant la couche externe est choisie pour ses propriétés mécaniques et hygiéniques. Ces doses multicouches permettent d 'obtenir des objets multicouche par compression moulage de ladite dose. Cependant, les objets obtenus selon la méthode décrite dans le brevet US 4 876 052 nécessitent une proportion importante de résine fonctionnelle dans l'objet ; ce qui engendre deux inconvénients majeurs ; le premier étant un coût prohibitif et le second une résistance aux sollicitations mécaniques amoindrie. L'absence d'adhésion entre la résine fonctionnelle et la résine extérieure réduit la solidité de l'objet et crée un risque de dé cohésion de la couche extérieure. Un autre inconvénient du brevet US 4 876 052 réside dans le fait que l'on ne peut que faiblement ajuster la quantité respective des résines 2 et 3 ; ces quantités étant fixées par la géométrie de l'objet et par les écoulements lors de la compression de la dose.

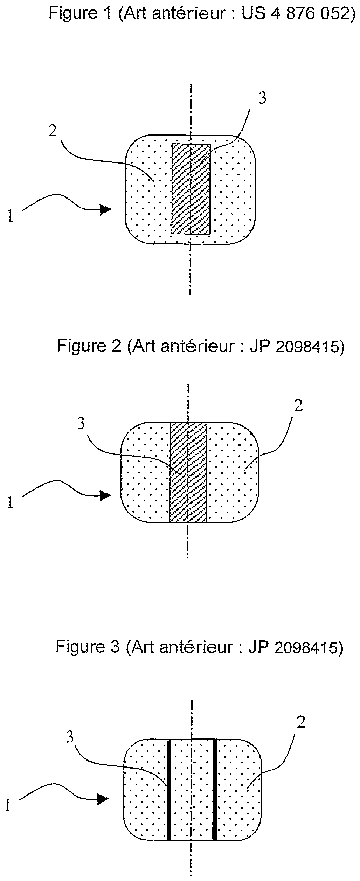

Le brevet Japonais JP 2098415 propose de réaliser un objet multicouche par compression moulage en partant d'une dose cylindrique (figure 2) caractérisée par le fait que la résine synthétique 2 couvre seulement les faces latérales de la résine fonctionnelle 3. Le moulage par compression de cette dose selon son axe de symétrie conduit à un objet présentant une structure multicouche caractérisée par le fait que la résine synthétique 2 emprisonne partiellement la résine fonctionnelle 3. Cependant, les objets multicouches réalisés à partir de deux résines selon le brevet JP 2098415 présentent plusieurs inconvénients majeur ; le premier étant d'avoir la résine fonctionnelle 3 exposée en surface centrale de l'objet sur au moins 10% de la surface totale de l'objet ; et le second étant de nécessiter une quantité de résine fonctionnelle 3 dans l'objet d'au moins 30% de la quantité totale de résine. Cela conduit d'une part à des objets ayant un coût prohibitif, et d'autre part à des objets présentant des propriétés mécaniques fortement modifiées principalement au centre de l'objet. Un autre inconvénient du brevet JP 2098415 réside dans le fait que l'on ne peut que faiblement ajuster la quantité respective des résines 2 et 3, ces quantités étant fixées par la géométrie de l'objet et les écoulements lors de la compression de la dose. Le brevet JP 2098415 présente un dernier inconvénient majeur qui est le fait que les deux résines se retrouvent au moins partiellement en surface de l'objet, ce qui pose des problèmes d'hygiène en fonction des résines utilisées.

Il est proposé dans le brevet JP 2098415 d'utiliser une dose cylindrique comportant 3 couches (figure 3) pour remédier en partie aux inconvénients précités. Cette dose est constituée d'une première résine formant la partie centrale de la dose, d'une résine fonctionnelle 3 couvrant seulement les faces latérales de la première résine, et d'une troisième résine 2 couvrant seulement les faces latérales de la résine fonctionnelle. L'écrasement de cette dose composite selon son axe de symétrie conduit à un objet multicouche. L'utilisation d'une dose tri-couche présente l'avantage de réduire la quantité de résine fonctionnelle 3 utilisée et conduit à des objets présentant des propriétés mécaniques faiblement modifiées par rapport au même objet comportant une seule résine 2. Cette méthode permet d'ajouter une couche adhésive entre les résines de nature différente ; par conséquent la cohésion et la solidité de l'objet est améliorée. Cependant, la résine fonctionnelle 3 ne couvre pas la partie centrale de l'objet multicouche ce qui conduit à des objets sans propriété barrière proche de l'axe de symétrie sur une surface d'au moins 10% de la surface de l'objet. Cette zone centrale de l'objet non couverte par la couche de résine barrière 3 diminue les performances barrière de l'objet et rend cette solution moins performante. Le brevet JP 2098415 présente un dernier inconvénient majeur qui est le fait que les trois résines se retrouvent au moins partiellement en surface de l'objet, ce qui pose des problèmes d'hygiène en fonction des résines employées.

Le document JPH0298415 A décrit une méthode de fabrication de doses de résine synthétique multicouche pour la réalisation d'objets multicouches par compression moulage selon le préambule de la revendication 1.

### Objet de l'invention

La présente invention permet de réaliser des doses de résine synthétique multicouche pour la réalisation d'objets multicouches par compression moulage en remédiant aux problèmes précités.

### Résumé de l'invention

La divulgation consiste en une dose multicouche présentant un axe de symétrie pour la réalisation d'objets multicouches par compression moulage, ladite dose étant constituée d'une première résine synthétique et d'au moins une fine couche fonctionnelle formant la surface d'un corps de révolution ; ladite couche fonctionnelle étant emprisonnée dans la première résine ; la dose multicouche étant caractérisée par le fait qu'au plus une extrémité de ladite couche n'est pas emprisonnée dans la première résine.

L'invention est particulièrement utile pour réaliser des objets multicouches destinés à être utilisés dans le domaine de l'emballage et plus particulièrement dans le domaine alimentaire où les normes d'hygiènes sont élevées.

La divulgation décrit des doses multicouches qui permettent d'obtenir des emballages ou composants d'emballages ayant une couche fonctionnelle totalement absente de la surface de la paroi de l'emballage étant en contact avec le produit emballé.

Selon la divulgation, la fine couche fonctionnelle 3 est totalement emprisonnée dans la résine 2 formant la dose. L'objet multicouche obtenu est caractérisé par le fait que la couche fonctionnelle 3 est totalement emprisonnée dans la paroi dudit objet, de sorte que seule la résine 2 est présente en surface dudit objet.

Selon un second mode de l'invention, la fine couche fonctionnelle 3 est totalement emprisonnée sauf l'une de ses extrémités, ladite extrémité étant apparente en surface de ladite dose. L'objet multicouche obtenu ; comportant une face interne et une face externe ; est caractérisé par le fait que la couche fonctionnelle 3 est au moins absente de l'une des faces de l'objet.

La méthode d'obtention des doses multicouches est décrite dans la présente invention.

### Description détaillée de l'invention

L'invention sera mieux comprise ci-après au moyen d'une description détaillée des exemples illustrés par les figures suivantes.

### Brève description des figures

Les figures 1 à 3 décrivent les doses multicouches décrites dans l'art antérieur pour réaliser des objets multicouches par compression moulage.
La figure 1 montre une dose bicouche réalisée selon le brevet US 4 876 052
La figure 2 montre une dose bicouche utilisée dans le brevet JP 2098415.
La figure 3 illustre une dose comportant 3 couches décrite dans le brevet JP 2098415.
La figure 4 montre un premier exemple de dose multicouche. Cette dose cylindrique comprend une fine couche fonctionnelle 3 de résine, totalement emprisonnée à l'intérieur de la résine 2 formant la dose.
La figure 5 illustre un objet multicouche réalisé à partir de la compression dans un moule de la dose illustrée figure 4. La couche fonctionnelle 3 forme un pli et est complètement absente de la surface de l'objet.
La figure 6 illustre une dose multicouche. Cette dose cylindrique comprend une fine couche fonctionnelle de résine 3, ayant une extrémité 5 qui n'est pas emprisonnée à l'intérieur de la résine 2 formant ladite dose.
La figure 7 illustre un objet multicouche obtenu à partir de la compression dans un moule de la dose illustrée figure 6. La couche de résine fonctionnelle 3 est emprisonnée dans la résine 2, sauf son extrémité 5 qui est affleurante en surface externe 11 dudit objet.
La figure 8 illustre un autre exemple de dose multicouche. Cette dose tubulaire est formée d'une fine couche fonctionnelle 3 totalement emprisonnée à l'intérieur de la résine 2 formant ladite dose.
La figure 9 montre une épaule de tube obtenue par la compression dans un moule de la dose présentée figure 8. La couche fonctionnelle 3 est totalement absente de la surface de ladite épaule de tube.
La figure 10 illustre un autre exemple de dose multicouche. Cette dose tubulaire est formée d'une fine couche fonctionnelle 3 partiellement emprisonnée à l'intérieur de la résine 2 formant ladite dose. L'extrémité 5 de la couche fonctionnelle 3 est présente en surface de la dose.
La figure 11 montre une épaule de tube obtenue par la compression dans un moule de la dose présentée figure 10. La couche fonctionnelle 3 est totalement absente de la surface interne 10 de ladite épaule de tube ; ladite face interne étant en contact avec le produit emballé. La couche fonctionnelle 3 est partiellement présente en surface externe de l'épaule de tube.
Les figures 12, 13, 14 et 15 montrent d'autres exemples de dose multicouche.
La figure 16 montre une première méthode pour réaliser des doses multicouche.
La figure 17 illustre une autre méthode pour réaliser des doses multicouche.
La figure 18 montre une méthode pour réaliser des doses correspondant à l'invention.
La figure 19 illustre une autre méthode pour réaliser des doses selon l'invention.

### Description détaillée des figures

La divulgation décrit des doses multicouches avantageuses pour réaliser des objets multicouches et en particulier des emballages ou composants d'emballages. Pour des raisons d'hygiène, il est souvent souhaitable que le produit emballé ne soit pas en contact direct avec les résines fonctionnelles. Les résines fonctionnelles peuvent être des résines barrières que l'on utilise pour apporter des propriétés d'imperméabilité aux gaz ou aux arômes, ou des résines adhésives que l'on utilise pour associer plusieurs résines.

La divulgation décrit des doses multicouches qui permettent d'obtenir des emballages ou composants d'emballages pouvant être utilisés dans le domaine alimentaire ; la couche fonctionnelle 3 étant totalement absente de la surface de l'emballage qui est en contact avec le produit emballé.

Selon un premier mode de de la divulgation, il a été trouvé qu'une dose ayant une fine couche fonctionnelle 3 complètement emprisonnée dans une première résine 2 était particulièrement avantageuse pour réaliser des objets multicouches ayant des propriétés hygiéniques élevées. L'objet multicouche obtenu est caractérisé par le fait que la couche fonctionnelle 3 est totalement emprisonnée dans la paroi dudit objet, de sorte que seule la résine 2 est présente en surface dudit objet.

Selon la divulgation, la fine couche fonctionnelle 3 est totalement emprisonnée sauf au niveau de l'une de ses extrémités, ladite extrémité étant apparente en surface de ladite dose. L'objet multicouche obtenu par la compression de la dose dans un moule ; comporte une face interne et une face externe ; et est caractérisé par le fait que la couche fonctionnelle 3 est au moins absente de l'une des faces de l'objet.

Une grande diversité de doses multicouches peut être réalisée selon l'invention. Les dites doses peuvent être de type cylindrique ou tubulaire, ou de géométrie plus complexe.

L'invention concerne aussi les méthodes de réalisation desdites doses.

La divulgation décrit également les objets multicouches obtenus par le moulage par compression desdites doses.

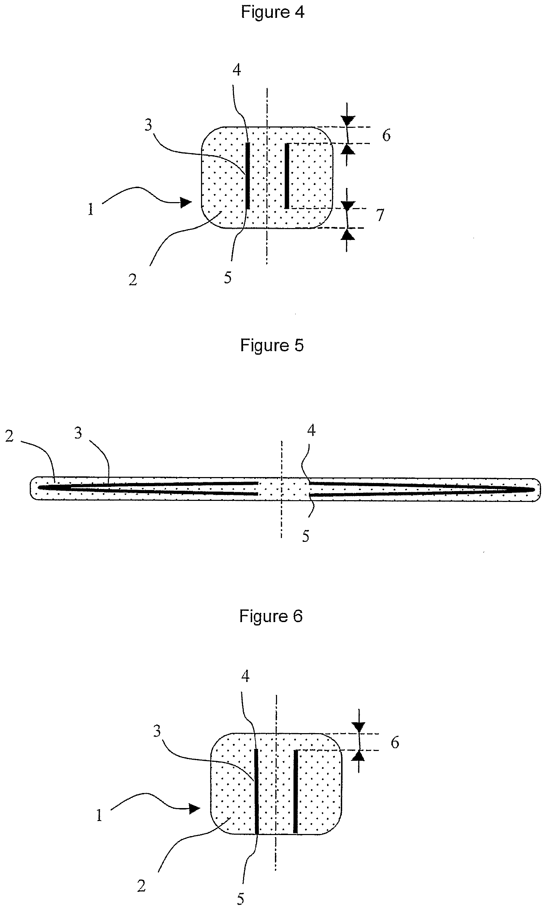

La figure 4 illustre une dose multicouche.

Cette dose 1 est constituée d'une fine couche de résine fonctionnelle 3 emprisonnée dans une résine 2. La fine couche de résine fonctionnelle 3 comporte deux extrémités libres 4 et 5 situées à l'intérieur de la résine 2 ; lesdites extrémités étant séparées de la surface de ladite dose d'une distance 6, 7 suffisante pour que ces extrémités soient absentes également de la surface de l'objet moulé. La couche fonctionnelle 3 est disposée dans la dose de sorte que ladite couche 3 soit répartie dans tout l'objet moulé sans que ladite couche 3 apparaisse en surface dudit objet. La figure 4 illustre une dose dans laquelle la couche fonctionnelle décrit l'enveloppe d'un cylindre centré sur l'axe de symétrie de la dose. Cette dose présente l'avantage d'être fabriquée facilement.

La couche fonctionnelle 3 représente idéalement une faible partie du volume de la dose ou de l'objet ; le volume de la couche 3 étant généralement inférieur à 20% du volume total, et de préférence inférieur 10%.

La figure 5 montre l'objet multicouche obtenu à partir de la compression dans un moule de la dose représentée figure 4. Cet objet comporte la fine couche fonctionnelle 3 totalement emprisonnée dans la paroi dudit objet ; ladite couche 3 formant un pli proche de la périphérie dudit objet ; ledit pli et lesdites extrémités 4 et 5 étant totalement emprisonnés dans ledit objet.

La relation entre la position de la fine couche 3 dans la dose et dans l'objet est définie par l'écoulement multicouche pendant la compression de ladite dose dans le moule.

Il a été trouvé que la position du pli de la couche fonctionnelle 3 dans l'objet dépend de la position radiale de la couche 3 dans ladite dose ; quand la couche 3 se rapproche de la périphérie de la dose, le pli de la couche 3 se rapproche de la périphérie de l'objet. Si la couche 3 est trop proche de la périphérie de la dose, on retrouve une partie de la couche 3 en surface de l'objet. Il existe donc une position optimale de la couche 3 dans ladite dose, qui conduit à la propagation de la couche 3 et la formation d'un pli à proximité de la périphérie de l'objet ; ladite couche 3 restant emprisonnée dans l'objet.

Il a été trouvé également que la position des extrémités 4 et 5 de la couche fonctionnelle 3 dans l'objet dépendent peu des écoulements pendant la compression. Aussi, il a été observé qu'il est difficile d'emprisonner dans l'objet les extrémités de la couche fonctionnelle 3 lorsque celle-ci n'est pas emprisonnée dans la dose. Inversement, il a été trouvé que lorsque les extrémités 4 et 5 de la couche fonctionnelle 3 sont absentes de la surface de la dose, celles-ci sont également absentes de la surface de l'objet. Il a également été observé qu'il suffisait d'une distance très petite entre les extrémités de la couche 3 et la surface de la dose pour que ces dernières soient absentes de la surface de l'objet. Des distances 6 et 7, entre les extrémités de la couche 3 et la surface de la dose, aussi petites que 50 microns permettent d'éviter que les extrémités de la couche 3 se retrouve en surface de l'objet.

La figure 6 illustre une dose multicouche.

Cette dose 1 est constituée d'une fine couche de résine fonctionnelle 3 emprisonnée dans une résine 2. La fine couche de résine fonctionnelle 3 comporte deux extrémités libres 4 et 5 ; la première extrémité 4 étant totalement emprisonnée dans la résine 2, de sorte que l'extrémité 4 est totalement absente de la surface de ladite dose ; la deuxième extrémité 5 étant présente en surface de ladite dose. La première extrémité 4 est séparée de la surface de ladite dose d'une distance 6 suffisante pour que cette extrémité soit absente également de la surface de l'objet moulé. La couche fonctionnelle 3 est disposée dans la dose de sorte que ladite couche 3 se répartisse dans tout l'objet moulé sans que ladite couche 3 apparaisse en surface de la paroi dudit objet en des endroits ou les contraintes d'hygiènes sont importantes.

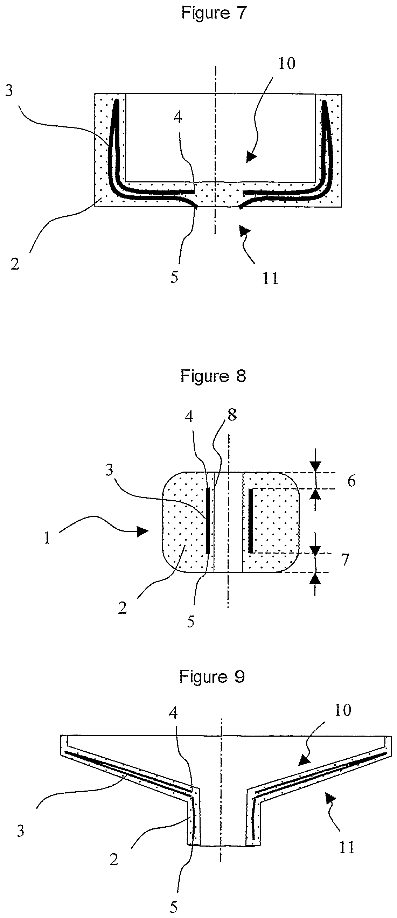

La figure 7 montre un emballage multicouche obtenu à partir de la compression dans un moule de la dose représentée figure 6. Cet emballage présente la fine couche fonctionnelle 3 totalement absente de la surface 10 de la paroi dudit emballage en contact avec le produit emballé. La couche fonctionnelle 3 forme un pli proche de la périphérie dudit emballage ; ledit pli et ladite extrémité 4 étant totalement emprisonnés dans la paroi de l'emballage. L'extrémité 5 de la couche fonctionnelle 3 est présente au niveau de la surface externe 11 de l'emballage ; ladite surface externe 11 n'étant pas en contact avec le produit emballé. La couche 3 n'est présente que sur une très faible partie de la surface de l'emballage ; cette surface représentant généralement moins de 1% de la surface totale, et préférentiellement moins de 0,1% de la surface totale compte tenu de la faible épaisseur de ladite couche 3.

Plusieurs doses multicouches sont décrites à titre d'exemple.

Un exemple de dose est illustré figure 8. Cette dose comprend une fine couche fonctionnelle 3 emprisonnée dans une résine 2 formant la dose. La couche fonctionnelle est emprisonnée à la fois latéralement et en ses extrémités 4 et 5, de sorte que la couche fonctionnelle 3 se trouve totalement absente de la surface de la dose. La dose comporte un orifice 8 centré sur l'axe de symétrie.

La figure 9 montre une épaule de tube obtenue par compression dans un moule de la dose illustrée figure 8. On retrouve la fine couche 3 totalement absente de la surface interne 10 et externe 11 de ladite épaule ; la couche 3 formant un pli en périphérie de l'épaule et les extrémités 4 et 5 de ladite couche 3 se trouvant à proximité de l'orifice 9 dudit objet.

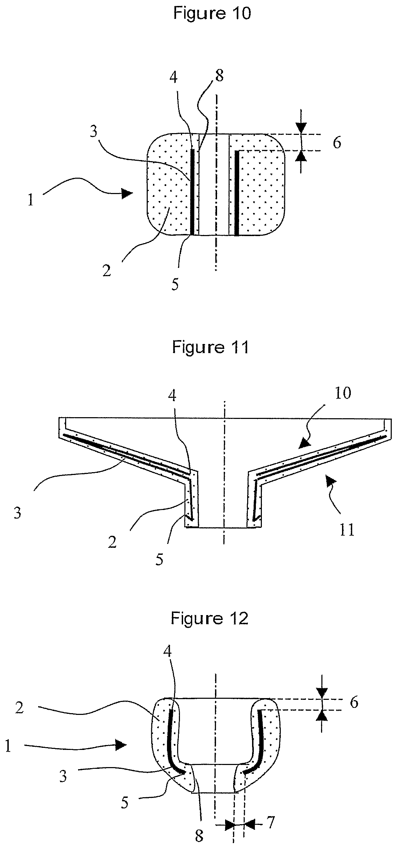

La figure 10 illustre une dose comportant un orifice. Cette dose 1 est constituée d'une fine couche de résine fonctionnelle 3 emprisonnée dans une résine 2. La fine couche de résine fonctionnelle 3 comporte deux extrémités libres 4 et 5 ; la première extrémité 4 étant totalement emprisonnée dans la résine 2; la deuxième extrémité 5 étant présente en surface de ladite dose.

La figure 11 montre une épaule de tube obtenue par compression dans un moule de la dose illustrée figure 10. On retrouve la fine couche 3 totalement absente de la surface 10 de l'épaule, ladite surface 10 se trouvant à l'intérieur du tube et étant en contact avec le produit emballé. La couche 3 forme un pli en périphérie de l'épaule et est totalement emprisonné à l'intérieur de la paroi du tube. L'extrémité 5 de la couche 3 est présente sur la surface extérieure 11, la surface 11 étant à l'extérieur de l'emballage.

La figure 12 montre un autre exemple de dose particulièrement avantageux pour réaliser des objets multicouches. L'emprisonnement des extrémités 4 et 5 de la fine couche fonctionnelle 3 à l'intérieur de la résine 2 permet d'obtenir un objet totalement dépourvu de ladite couche 3 en surface. Ces doses sont particulièrement avantageuses pour réaliser des objets multicouches avec ou sans orifice.

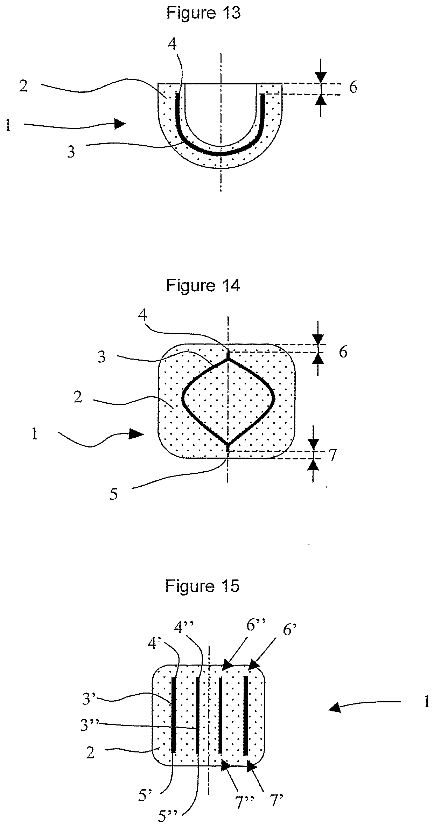

La figure 13 illustre une géométrie de dose, ayant une cavité en son centre. Cette dose multicouche comprend une fine couche fonctionnelle 3 emprisonnée dans une première résine 2 formant au moins 80% de ladite dose. L'extrémité 4 de la couche 3 se trouve à une distance 6 de la surface de la dose, de sorte que lors de la compression de ladite dose, l'extrémité 4 de ladite couche 3 est absente de la surface de l'objet.

La figure 14 montre une dose multicouche 1 comprenant une fine couche fonctionnelle 3 emprisonnée au moins en partie dans une première résine 2, ladite résine 2 représentant au moins 80% du volume de la dose. La couche 3 forme l'enveloppe d'un cops de révolution centré sur l'axe de symétrie de ladite dose. Selon la divulgation, les extrémités 4 et 5 de la couche 3 sont également emprisonnées dans la première résine 2, de sorte que la couche 3 se trouve totalement emprisonnée dans la résine 2. Selon la divulgation seule l'extrémité 5 de la couche 3 n'est pas emprisonnée dans la résine 2, de sorte qu'après compression de la dose dans un moule, seule l'extrémité 5 de la couche 3 se retrouve en surface de l'objet moulé.

La figure 15 illustre un autre exemple de dose comprenant deux fines couches fonctionnelles 3' et 3" centrées sur l'axe de symétrie de ladite dose et emprisonnées au moins en partie dans une première résine 2. Selon la divulgation la couche 3 est totalement emprisonnée dans la résine 2, même au niveau de ses extrémités 4', 5' et 4", 5". Selon la divulgation seules les extrémités 5' et 5" des couches 3' et 3" ne sont pas emprisonnées dans la résine 2.

Les objets représentés figures 9 et 11 ont été réalisés avec une fine couche de résine barrière (EVOH) emprisonnée dans une résine de polyéthylène (PE). Ces objets présentent une grande imperméabilité à l'oxygène ou aux arômes.

Pour la simplicité de l'exposé de l'invention, les figures ont volontairement été représentées avec seulement une couche fonctionnelle 3 emprisonnée dans une seconde résine 2. Il est connu que l'association de seulement deux résines ne permet généralement pas d'obtenir une adhésion suffisante à l'interface entre les deux résines. Aussi, il est courant d'utiliser des couches intermédiaires adhésives permettant d'associer des résines de nature différente tout en garantissant un bon niveau d'adhésion entre les couches. Ainsi, l'insertion d'une couche adhésive de part et d'autre de la couche barrière évite les éventuels problèmes de délamination ou décohésion dans les objets multicouches. Les couches adhésives et barrière sont parallèles et en faible quantité. L'ensemble des couches adhésives formant la couche fonctionnelle 3 représente généralement une quantité de résine inférieure à 15% du volume total de résine formant la dose, et préférentiellement une quantité intérieure à 10%. La présente divulgation ne se limite donc pas à des doses 3 couches telles que présentées figures 4, 6, 8 10, 12, 13, et 14 mais comportent plus généralement 5 couches ou plus.

Les résines utilisées dans le cadre de l'invention correspondent aux résines thermoplastiques couramment utilisés, et plus particulièrement celles utilisées dans le secteur de l'emballage. Parmi les résines barrières qui peuvent être utilisées pour former la couches fonctionnelle 3, on peut citer les copolymères d'éthylène vinyle alcool (EVOH), les polyamides tels que le Nylon-MXD6, les copolymères acrylonitrile méthyle acrylate (BAREX), les polymères fluorés tels que le PVDF. Citons également quelques résines pouvant être utilisées pour former la structure 2 de l'objet : polyéthylène (PE), polypropylène (PP), polystyrène (PS), polyamide (PA), polyester (PET). Cette liste n'est pas exhaustive. Lors du choix des résines, il est important de sélectionner des produits ayant des viscosités voisines. En général, il est préférable d'utiliser des résines qui à la température de travail présentent un rapport de viscosité inférieur à 10, et de préférence on choisira un rapport de viscosité inférieur à 3.

La méthode de moulage par compression consiste à alimenter une dose multicouche de résines synthétiques à l'état fondu dans la cavité d'un moule ; à former l'objet par moulage par compression de ladite dose dans la cavité dudit moule ; à refroidir l'objet puis à le démouler.

L'invention permet de réaliser des objets avec une très fine couche fonctionnelle, ladite couche fonctionnelle pouvant représenter moins de 5% du volume de l'objet.

La méthode de réalisation des objets multicouche exposée ci-dessous est particulièrement avantageuse pour réaliser des objets tels que des bouchons, des couvercles, des préformes ou encore des épaules de tube. Cette méthode peut être utilisée également de façon avantageuse pour réaliser des préformes sous forme de galette ; ces galettes étant ensuite utilisées en thermoformage ou thermoformage soufflage pour former des objets multicouches.

Les doses présentées précédemment peuvent être réalisées selon plusieurs méthodes.

Une première méthode, qui ne fait pas partie de l'invention, consiste à co-extruder les résines afin de former une structure multicouche ; et au moins la couche fonctionnelle 3 est extrudée de façon intermittente.

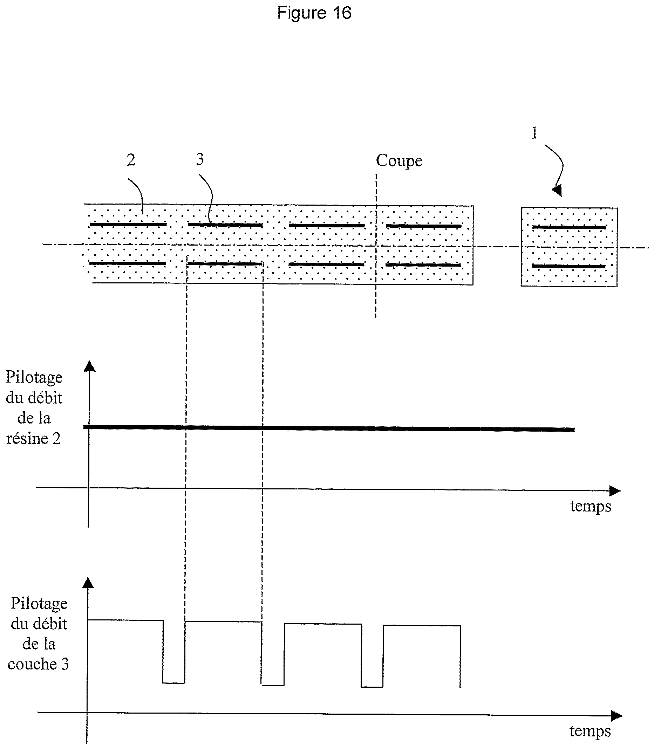

Un exemple de cette méthode est illustré figure 16. Un jonc multicouche est co-extrudé sans interruption ; le débit de la couche fonctionnelle 3 étant périodique et intermittent, la périodicité de la couche 3 et de la découpe dudit jonc étant identique. Cette méthode est particulièrement avantageuse pour réaliser des doses multicouches à grande cadence. Cette méthode est utilisée avantageusement pour réaliser des doses ayant la couche fonctionnelle 3 totalement emprisonnée dans la résine 2.

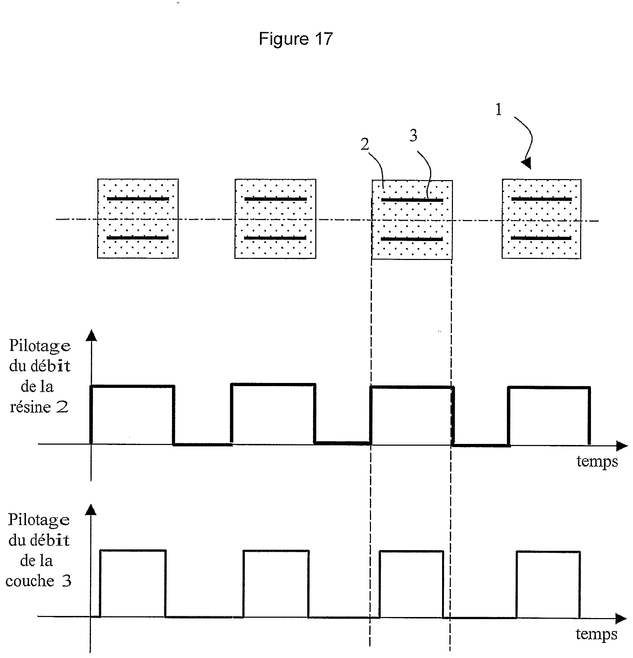

Une second exemple de réalisation de doses multicouches selon cette première méthode est illustré figure 17. Un jonc multicouche est co-extrudé de façon discontinue, de sorte que le débit global de résine co-extrudée varie entre une valeur maxi et une valeur nulle ; la quantité de matière dosée pendant une période correspondant à une dose. La couche fonctionnelle 3 est alimentée pendant un temps plus court que la résine 2 de sorte que les extrémités de la couche 3 se trouvent emprisonnées dans la résine 2.

Une deuxième méthode de fabrication de dose multicouche selon l'invention consiste à emprisonner au moins une extrémité de la couche 3 dans la résine 2 ; ledit emprisonnement étant réalisé en dehors de l'outil d'extrusion.

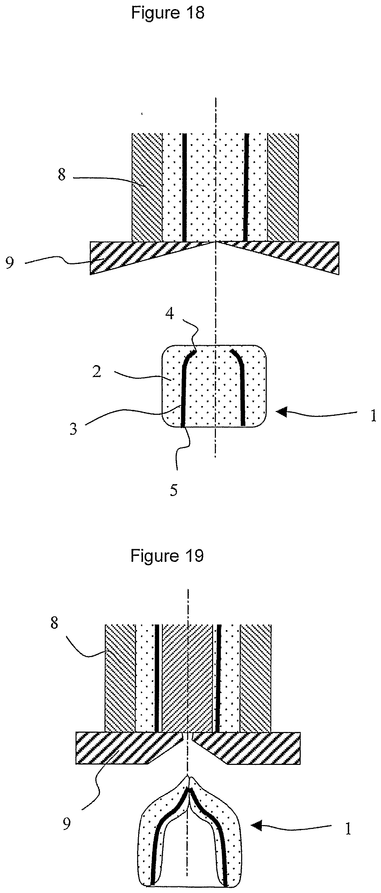

Un exemple de cette deuxième méthode est illustré figure 18. Un couteau 9 coupe de façon périodique l'écoulement multicouche en sortie de l'outil d'extrusion 8, formant ainsi des doses 1. La dose 1 comporte une couche fonctionnelle 3 emprisonnée dans la résine 2, sauf au niveau de l'extrémité 5 de ladite couche 3. L'extrémité 4 de ladite couche 3 est emprisonnée dans la résine 2 ; l'emprisonnement étant réalisé lors de la coupe du jonc multicouche par le couteau 9. La géométrie du couteau 9, associé au mouvement de coupe dudit couteau entraîne de la résine 2 qui vient emprisonner l'extrémité 4 de la couche 3.

Un autre exemple de réalisation de doses multicouches selon la deuxième méthode est illustré figure 19. Des doses sont formées à partir d'un écoulement multicouche tubulaire. A la sortie de l'outil d'extrusion 8, le couteau 9 coupe périodiquement la dose 1 et emprisonne conjointement l'extrémité 4 de la couche fonctionnelle 3 dans la résine 2.

Des méthodes similaires peuvent être utilisées pour emprisonner une ou les deux extrémités de la couche 3 dans la résine 2. Ces méthodes peuvent être appliquées lors de la coupe de la dose, lors de son transfert dans la cavité du moule ou à l'intérieur du dispositif de moulage. Ces méthodes ont un point commun qui consiste à modifier la géométrie initiale de la dose afin d'entraîner la résine 2, et emprisonner l'extrémité de la couche 3.

Dans les exemples présentés ici, les doses et les objets sont de géométrie simple, mais il va de soi que l'invention concerne n'importe quelle géométrie de dose et d'objet.

Les objets obtenus comportent une couche fonctionnelle 3 formant au moins un pli au niveau de la périphérie de l'objet. Des objets comportant également un second pli proche de l'axe de symétrie de l'objet peuvent être obtenus. Une disposition de la couche fonctionnelle en forme de zigzag peut être obtenue dans l'objet.

Il existe de nombreuses dispositions de la couche fonctionnelle 3 dans la dose. Il peut être avantageux de disposer la couche fonctionnelle 3 dans la dose de sorte que ladite couche fonctionnelle 3 forme l'enveloppe d'un corps de révolution centré sur l'axe de symétrie. Lorsque la distance de la couche fonctionnelle 3 à l'axe de symétrie est variable, des objets multicouches avantageux peuvent être obtenus.

Des doses comprenant plusieurs couches fonctionnelles 3 peuvent également être utilisées ; lesdites couches fonctionnelles étant toutes centrées sur l'axe de symétrie de ladite dose. Les objets multicouches obtenus sont caractérisés par le fait que les couches fonctionnelles se superposent au moins partiellement, et forment chacune au moins un pli.

D'autres géométries de doses peuvent être utilisées. Il a été observé que des doses présentant une partie de leur surface concave sont particulièrement avantageuses. De telles géométries de doses facilitent une bonne répartition de la couche fonctionnelle dans l'objet multicouche.

## Revendications

1. Méthode de fabrication de doses (1) de résine synthétique multicouche pour la réalisation d'objets multicouches par compression moulage; ladite dose (1) présentant un axe de symétrie et comprenant une première résine synthétique (2) et au moins une fine couche fonctionnelle (3) de résine synthétique formant l'enveloppe externe d'un corps de révolution défini autour dudit axe de symétrie; ladite couche fonctionnelle (3) comprenant deux extrémités disposées selon une direction parallèle à l'axe de symétrie; ladite méthode de fabrication comprenant une étape selon laquelle les résines (2, 3) sont co-extrudées dans un outil d'extrusion (8) afin de former un écoulement multicouche ; ledit écoulement étant coupé périodiquement afin de former des portions individuelles ; lesdites portions étant transférées dans un moule de compression ; **caractérisée par le fait que** l'on emprisonne au moins l'une des extrémités de la couche fonctionnelle (3) dans la première résine synthétique (2) en déformant ladite première résine, ladite déformation consistant à modifier la géométrie initiale de la dose (1) et étant réalisée en dehors de l'outil d'extrusion (8), **par le fait que** l'on déforme lesdites portions lors de la coupe de l'écoulement multicouche au moyen d'un couteau (9) et que la déformation est réalisée par le couteau (9).

## Patentansprüche

1. Verfahren zur Herstellung von mehrschichtigen Kunstharzdosen (1) für die Herstellung von mehrschichtigen Gegenständen durch Formpressen; wobei die Dosis (1) eine Symmetrieachse aufweist und ein erstes Kunstharz (2) und mindestens eine dünne Funktionsschicht (3) aus Kunstharz umfasst, der die Außenhülle eines um die Symmetrieachse definierten Rotationskörpers bildet; wobei die Funktionsschicht (3) zwei parallel zur Symmetrieachse angeordnete Enden umfasst; wobei das Herstellungsverfahren einen Schritt umfasst, gemäß dem die Harze (2, 3) in einem Extrusionswerkzeug (8) coextrudiert werden, um einen mehrschichtigen Strom zu bilden; wobei der Strom in regelmäßigen Abständen geschnitten wird, um individuelle Portionen zu bilden; wobei die Portionen in eine Pressform überführt werden; **dadurch gekennzeichnet, dass** man mindestens eines der Enden der Funktionsschicht (3) in dem ersten Kunstharz (2) einschließt, indem man das erste Harz verformt, wobei die Verformung darin besteht, die anfängliche Geometrie der Dosis (1) zu modifizieren, und außerhalb des Extrusionswerkzeugs (8) durchgeführt wird, dadurch, dass man die Portionen beim Schneiden des mehrschichtigen Stroms mit einem Messer (9) verformt und dass die Verformung durch das Messer (9) bewerkstelligt wird.

## Claims

1. Method for manufacturing doses (1) of multilayer synthetic resin for the production of multilayer objects by compression moulding; said dose (1) having an axis of symmetry and comprising a first synthetic resin (2) and at least one thin functional layer (3) of synthetic resin forming the external envelope of a body exhibiting symmetry of revolution defined around said axis of symmetry; said functional layer (3) comprising two ends disposed in a direction parallel to the axis of symmetry; said manufacturing method comprising a step in which the resins (2, 3) are co-extruded through an extrusion tool (8) in order to form a multilayer flow; said flow being cut periodically in order to form individual portions; said portions being transferred into a compression mould; **characterized in that** at least one of the ends of the functional layer (3) is trapped in the first synthetic resin (2) by deforming said first resin, said deformation consisting in modifying the initial geometry of the dose (1) and being carried out outside the extrusion tool (8), **in that** said portions are deformed during the cutting of the multilayer flow by means of a cutter (9) and **in that** the deformation is carried out by the cutter (9).
